# EUROPEAN PATENT APPLICATION

(11) **EP 2 886 860 A1**
(43) Date of publication of application: **24.06.2015**
(21) Application number: 13817530.2
(22) Date of filing: 28.06.2013
(51) Int. Cl.: F04B 23/04, F04D 15/00

(54) **PUMP UNIT**

(30) Priority: 10.07.2012 JP 2012154458
(71) Applicant: Kabushiki Kaisha Toshiba, Minato-ku Tokyo 105-8001 (JP)
(72) Inventor: AOKI, Kensuke, Tokyo 105-8001 (JP)
(74) Representative: Hoffmann Eitle
(86) International application number: PCT/JP2013/067879
(87) International publication number: WO 2014/010441

(57) **Abstract**

According to an embodiment, a pump unit provided for piping which feeds a liquid at a preset unit flow rate includes (n + 1) pumps (10-1∼10-3) and a constant flow valve (20). The (n + 1) pumps (10-1∼10-3) are arranged in series and set to pressurize the liquid so as to achieve the unit flow rate when n pumps are arranged in series. When the fluid is pressurized by n pumps of the (n + 1) pumps (10-1∼10-3), the constant flow valve (20) installed downstream of the (n + 1) pumps gives first resistance to the fluid to feed the fluid at the unit flow rate. In addition, when the fluid is pressurized by the (n + 1) pumps (10-1∼10-3), the constant flow valve (20) gives second resistance larger than the first resistance to the fluid to feed the fluid at the unit flow rate.

## Description

### Technical Field

Embodiments described herein relate generally to a pump unit which feeds a liquid to piping at a preset flow rate.

### Background Art

Some water-cooled apparatuses use a pump unit which generates a required unit flow rate by series-connecting two pumps. Such a type of pump unit is designed to make a flow rate achieve a required unit flow rate by manually performing fine adjustment of the opening of a flow regulating valve.

In this type of pump unit, if one pump fails, the flow rate which can be generated by the other pump becomes equal to or less than a required unit flow rate. In order to ensure the redundancy of pumps, therefore, it is necessary to provide a pump unit having the same arrangement as that described above as a redundant system. If the pump unit of the current system fails, a reduction in flow rate of liquid fed to the subsequent stage is avoided by switching to the pump unit of the redundant system.

However, installing pump units of the current and redundant systems will require twice as many pumps as required and also require an electronic circuit and the like for controlling switching between the current system and the redundant system. This leads to an increase in the size and cost of the apparatus.

### Citation List

### Patent Literatures

Patent Literature 1: Jpn. Pat. Appln. KOKAI Publication No. 2005-315255

### Summary of Invention

### Technical Problem

As described above, in order to ensure redundancy, a water-cooled apparatus using conventional pump units requires an electronic circuit for automatically switching between the current system and the redundant system, in addition to two pump units having the same arrangement. This leads to an increase in the size and cost of the water-cooled apparatus.

It is therefore an object to provide a pump unit which can ensure redundancy without using a plurality of pump units.

### Solution to Problem

According to an embodiment, a pump unit provided for piping which feeds a liquid at a preset unit flow rate includes (n + 1) pumps and a constant flow valve. The (n + 1) pumps are arranged in series and set to pressurize the liquid so as to achieve the unit flow rate when n pumps are arranged in series. When the fluid is pressurized by n pumps of the (n + 1) pumps, the constant flow valve installed downstream of the (n + 1) pumps gives first resistance to the fluid to feed the fluid at the unit flow rate. In addition, when the fluid is pressurized by the (n + 1) pumps, the constant flow valve gives second resistance larger than the first resistance to the fluid to feed the fluid at the unit flow rate.

### Brief Description of Drawing

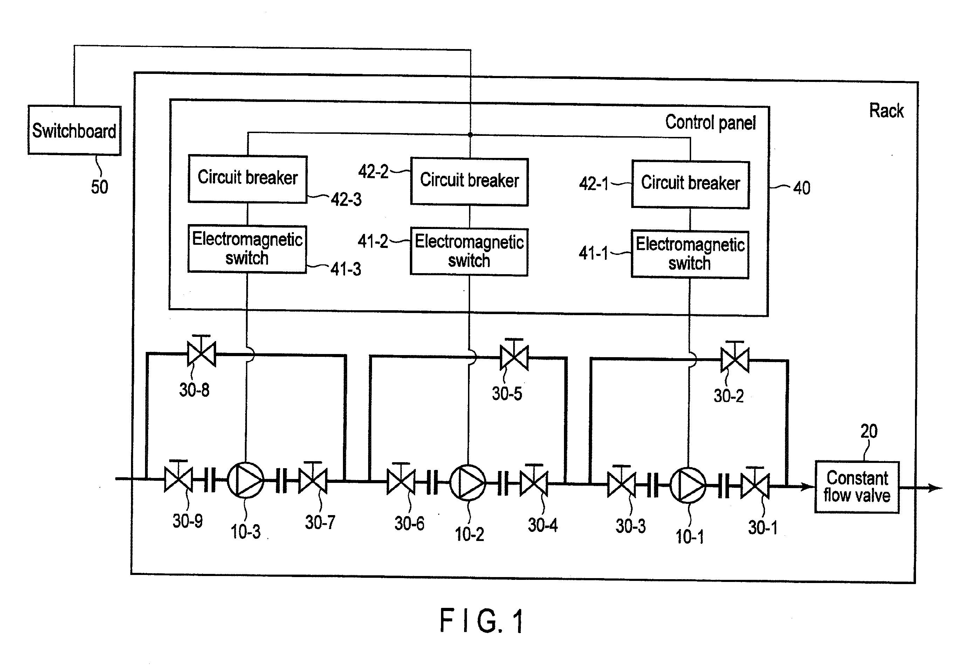

[FIG. 1] FIG. 1 is a block diagram showing the arrangement of a pump unit according to an embodiment.

### Description of Embodiments

An embodiment will be described below with reference to the accompanying drawing. FIG. 1 is a block diagram showing the arrangement of a pump unit according to this embodiment. Note that the pump unit shown in FIG. 1 is used in, for example, a water-cooled apparatus, and will be described below by taking an example the case of feeding cooling water.

In the pump unit shown in FIG. 1, pumps 10-1 to 10-3, a constant flow valve 20, ball valves 30-1 to 30-9, and a control panel 40 are mounted on a pump rack. In this case, the unit flow rate of cooling water required to be fed by the pump unit is set in advance.

The pumps 10-1 to 10-3 are attached to the pump rack so as to be arranged in series. The pumps 10-1 to 10-3 are connected to the control panel 40 and receive currents from a switchboard 50 via the control panel 40.

The pumps 10-1 to 10-3 pressurize supplied cooling water and feed the water. The pumps 10-1 to 10-3 are set such that when two pumps of the pumps 10-1 to 10-3 are arranged in series and pressurize cooling water, the resultant flow rate will exceed a required unit flow rate with a certain margin.

The constant flow valve 20 receives cooling water pressurized by at least two pumps, of the pumps 10-1 to 10-3, which are arranged in series. The constant flow valve 20 is structured to automatically adjust its opening in accordance with the pressure of supplied cooling water.

In a normal operation, the pumps 10-1 to 10-3 are simultaneously operated. The simultaneous operation of the three pumps will therefore cause an excessive flow rate compared with the required unit flow rate. For this reason, the constant flow valve 20 adjusts the opening in accordance with the water pressure to give resistance to the cooling water supplied from the pumps 10-1 to 10-3 and adjusts the flow rate of cooling water pressurized by the pumps 10-1 to 10-3 to the required unit flow rate.

If, for example, one of the pumps 10-1 to 10-3 fails, the remaining two pumps continue to operate. At this time, the constant flow valve 20 makes the resistance smaller, which is generated when the three pumps are operated, by adjusting the opening in accordance with the water pressure, thereby adjusting the flow rate of cooling water pressurized by the two pumps of the pumps 10-1 to 10-3 to the required unit flow rate.

The ball valves 30-1 to 30-9 respectively let cooling water flowing into the pumps 10-1 to 10-3 flow into bypass passages. Assume that an abnormality has occurred in the pump 10-1, and hence it is necessary to replace the pump 10-1. In this case, a repair person for the pump 10-1 opens the ball valve 30-2 and closes the ball valves 30-1 and 30-3. With this operation, the cooling water which has flowed into the pump 10-1 flows into the bypass passage, and the repair person can replace the pump 10-1.

The control panel 40 includes electromagnetic switches 41-1 to 41-3 and circuit breakers 42-1 to 42-3. The current supplied from the switchboard 50 is supplied to the pump 10-1 via the circuit breaker 42-1 and the electromagnetic switch 41-1. In addition, the current supplied from the switchboard 50 is supplied to the pump 10-2 via the circuit breaker 42-2 and the electromagnetic switch 41-2. Furthermore, the current supplied from the switchboard 50 is supplied to the pump 10-3 via the circuit breaker 42-3 and the electromagnetic switch 41-3.

The electromagnetic switches 41-1 to 41-3 include, for example, thermal relays, and detect the generation of abnormal heating in an electric path via the thermal relays. When abnormal heating is detected, one of the electromagnetic switches 41-1 to 41-3 which has detected the generation determines that an excessive load acts on the connected pump, that is, an overcurrent is supplied to the connected pump, and stops supplying current to the connected pump. That is, each of the electromagnetic switches 41-1 to 41-3 detects the occurrence of an abnormality in a corresponding one of the pumps 10-1 to 10-3, and stops supplying a current to the pump in which an abnormality has occurred.

When replacing pumps 10-1 to 10-3, the repair person manually operates the circuit breakers 42-1 to 42-3 to interrupt the supply of currents to the pumps 10-1 to 10-3. The repair person interrupts the supply of a current to a pump as a replacement target by using the corresponding circuit breaker, and then replaces the pump.

As described above, according to this embodiment, the pump unit includes the three pumps 10-1 to 10-3 arranged in series, two of which, arranged in series, can achieve the required unit flow rate, and the constant flow valve 20. With this arrangement, when all the three pumps 10-1 to 10-3 are normally operating, the constant flow valve 20 limits the flow rate to make it possible to feed cooling water to the subsequent stage at the required unit flow rate. In addition, even if one pump fails, the pump unit can feed cooling water to the subsequent stage at the required unit flow rate by using the two normal pumps.

The pump unit according to this embodiment can therefore ensure redundancy, while minimizing the number of pumps to be used, without using a plurality of pump units.

In addition, since it is possible to ensure redundancy by using the single pump unit, the number of pumps to be used can be suppressed. In addition, since there is no need to switch to a redundant system at the occurrence of an abnormality, there is no need to use any electronic circuit for switching control. Therefore, the pump unit according to this embodiment can suppress an increase in the size and cost of the water-cooled apparatus.

In addition, in this embodiment, the pump unit has the control panel 40 installed on the electric paths to the pumps 10-1 to 10-3. This makes it possible to automatically stop the operations of the pumps 10-1 to 10-3 even if abnormalities occur in the pumps 10-1 to 10-3.

Although this embodiment has exemplified the case in which the pump unit includes the pumps 10-1 to 10-3, the embodiment is not limited to this. For example, when a required unit flow rate can be achieved by n pumps arranged in series, the pump unit may include (n + 1) pumps.

An embodiment of the present invention has been described above. However, this embodiment is presented merely as an example and is not intended to restrict the scope of the invention. The embodiment can be carried out in various other forms, and various omissions, replacements, and alterations can be made without departing from the spirit of the invention. The embodiment and its modifications are also incorporated in the scope and the spirit of the invention as well as in the invention described in the claims and their equivalents. Reference Signs List
- 10-1 - 10-3: pump
- 20: constant flow valve
- 30-1 - 30-9: ball valve
- 40: control panel
- 41-1 - 41-3: electromagnetic switch
- 42-1 - 42-3: circuit breaker
- 50: switchboard

## Claims

1. A pump unit provided for piping which feeds a liquid at a preset unit flow rate, comprising:
(n + 1) pumps (10-1∼10-3) arranged in series and set to pressurize the liquid so as to achieve the unit flow rate when n pumps are arranged in series, and
a constant flow valve (20) installed downstream of the (n + 1) pumps (10-1∼10-3) and configured to feed the fluid at the unit flow rate by giving first resistance to the fluid when the fluid is pressurized by n pumps of the (n + 1) pumps (10-1∼10-3) and to feed the fluid at the unit flow rate by giving second resistance larger than the first resistance to the fluid when the fluid is pressurized by the (n + 1) pumps (10-1-10-3).

2. The pump unit according to claim 1, wherein each of the (n + 1) pumps (10-1∼10-3) receives a current from a switchboard (50) via a control panel (40), and
if an abnormality occurs in at least one of the (n + 1) pumps (10-1∼10-3), the control panel (40) stops supplying a current to the pump in which the abnormality has occurred.

3. The pump unit according to claim 1 or 2, wherein the n pumps comprise two pumps.
